# EUROPEAN PATENT APPLICATION

(11) **EP 4 064 075 A1**
(43) Date of publication of application: **28.09.2022**
(21) Application number: 21194236.2
(22) Date of filing: 01.09.2021
(51) Int. Cl.: G06F 16/583, G06V 30/196

(54) **INFORMATION PROCESSING APPARATUS, PROGRAM, AND INFORMATION PROCESSING METHOD**

(30) Priority: 26.03.2021 JP 2021054198
(71) Applicant: FUJIFILM Business Innovation Corp., Minato-ku Tokyo (JP)
(72) Inventor: OKADA, Shigeru, Yokohama-shi (JP); KUBO, Shusaku, Yokohama-shi (JP); KOSAKA, Fumi, Yokohama-shi (JP); SUZUKI, Yusuke, Yokohama-shi (JP); YAMAGUCHI, Masayuki, Yokohama-shi (JP); ANDO, Jun, Yokohama-shi (JP)
(74) Representative: Becker, Eberhard

(57) **Abstract**

An information processing apparatus includes a processor configured to acquire specific document data; and in a case where the specific document data includes a text code string, output the text code string included in the specific document data as input data for processing executed by outputting a text code string obtained by text recognition of document data in a predetermined format, in the predetermined format.

## Description

### BACKGROUND OF THE INVENTION

### (i) Field of the Invention

The present invention relates to an information processing apparatus, a program, and an information processing method.

### (ii) Description of Related Art

JP2004-348591A discloses a document search method for searching a document including a text recognition process of executing text recognition processing on an image of a search document, a misrecognized text processing process of applying predetermined processing to a word or a text that is presumed to be misrecognition from text data obtained by executing the text recognition processing, a generation process of generating text feature information based on the text data processed by the misrecognized text processing process, and a search process of using the text feature information generated in the generation process as a query, searching for holding means for holding the text feature information for each of a plurality of documents, and acquiring a document corresponding to the search document from the plurality of documents.

### SUMMARY OF THE INVENTION

There is processing executed by outputting a text code string obtained by text recognition of document data. On the other hand, some document data includes a text code string, and in a case where the text code string is output, an accuracy of the output text code string is improved as compared with a case of outputting the text code string obtained by text recognition of the document data. However, in order to be consistent with the processing executed by outputting the text code string obtained by text recognition of document data, even in a case where the document data includes a text code string, the text code string obtained by text recognition of the document data is output, and this may not improve the accuracy of the output text code string.

An object of the present invention is to improve an accuracy of an output text code string as compared with a configuration of outputting a text code string obtained by text recognition of document data even in a case where the document data includes the text code string.

According to a first aspect of the present disclosure, there is provided an information processing apparatus including a processor configured to acquire specific document data, and in a case where the specific document data includes a text code string, output the text code string included in the specific document data as input data for processing executed by outputting a text code string obtained by text recognition of document data in a predetermined format, in the predetermined format.

According to a second aspect of the present disclosure, there is provided the information processing apparatus according to the first aspect in which the processor may be configured to, in a case where the specific document data further includes text coordinates, further output the text coordinates included in the specific document data as input data for processing executed by outputting a text code string and text coordinates obtained by text recognition of the document data in the predetermined format, in the predetermined format.

According to a third aspect of the present disclosure, there is provided the information processing apparatus according to the first aspect in which the processor may be configured to determine whether or not the specific document data includes a text code string.

According to a fourth aspect of the present disclosure, there is provided the information processing apparatus according to the third aspect in which the specific document data may consist of a plurality of pages, and determination as to whether the specific document data includes a text code string may be made for each page.

According to a fifth aspect of the present disclosure, there is provided is the information processing apparatus according to the fourth aspect in which the plurality of pages may include a first page that includes a text code string and a second page that does not include a text code string, and the processor may be configured to output the text code string included in the first page in a format in which a text code string obtained by text recognition of the second page is output, as the predetermined format.

According to a sixth aspect of the present disclosure, there is provided the information processing apparatus according to the first aspect in which the processor may be configured to, in a case where the specific document data includes a text code string and image data, output a combined text code string obtained by combining the text code string included in the specific document data and a text code string obtained by text recognition of the image data, in the predetermined format.

According to a seventh aspect of the present disclosure, there is provided the information processing apparatus according to the sixth aspect in which the processor may be configured to output the combined text code string in the predetermined format in a case where a ratio of an area of the image data to an area of the specific document data is equal to or more than a threshold.

According to an eighth aspect of the present disclosure, there is provided a program for causing a computer to realize a function of acquiring specific document data, and a function of outputting, in a case where the specific document data includes a text code string, the text code string included in the specific document data as input data for processing executed by outputting a text code string obtained by text recognition of document data in a predetermined format, in the predetermined format.

According to a ninth aspect of the present disclosure, there is provided an information processing method including acquiring specific document data, and outputting, in a case where the specific document data includes a text code string, the text code string included in the specific document data as input data for processing executed by outputting a text code string obtained by text recognition of document data in a predetermined format, in the predetermined format.

According to the first aspect of the present invention, even in a case where the document data includes the text code string, an accuracy of the output text code string is improved as compared with a configuration of outputting a text code string obtained by text recognition of document data.

According to the second aspect of the present invention, even in a case where the document data includes the text code string and the text coordinates, an accuracy of the output text code string and text coordinates is improved as compared with a configuration of outputting a text code string and text coordinates obtained by text recognition of document data.

According to the third aspect of the present invention, even in a case where it is unknown whether the document data includes a text code string, the text code string may be output by an appropriate method.

According to the fourth aspect of the present invention, even in a case where the document data consists of a plurality of pages and it is different whether or not the text code string is included for each page, the text code string may be output by a method appropriate for each page.

According to the fifth aspect of the present invention, a text code string of a page that includes the text code string may be treated in the same way as a text code string obtained by text recognition of a page that does not include a text code string.

According to the sixth aspect of the present invention, in a case where the specific document data includes the image data, the text code string corresponding to the image data may be output.

According to the seventh aspect of the present invention, it is possible to suppress the output of an unnecessary text code string corresponding to the image data of a small area included in the specific document data.

According to the eighth aspect of the present invention, even in a case where the document data includes a text code string, the accuracy of the output text code string is improved as compared with the configuration of outputting a text code string obtained by text recognition of the document data.

According to the ninth aspect of the present invention, even in a case where the document data includes a text code string, the accuracy of the output text code string is improved as compared with the configuration of outputting a text code string obtained by text recognition of the document data.

### BRIEF DESCRIPTION OF THE DRAWINGS

Exemplary embodiment(s) of the present invention will be described in detail based on the following figures, wherein:
Fig. 1 is a diagram showing an overall configuration example of a computer system to which an exemplary embodiment of the present invention is applied;
Fig. 2 is a diagram showing a hardware configuration example of a business processing support system according to an exemplary embodiment of the present invention;
Fig. 3 is a diagram showing an example of a page that does not include text string information;
Fig. 4 is a diagram showing an example of a file of text recognition result;
Fig. 5 is a diagram showing an example of a page that includes text string information;
Fig. 6 is a diagram showing an example of text string information extracted directly from a page;
Fig. 7 is a diagram showing an example of a file obtained by format conversion;
Fig. 8 is a diagram showing an example of a page that includes text string information and an image;
Fig. 9 is a block diagram showing a functional configuration example of a business processing support system according to an exemplary embodiment of the present invention; and
Fig. 10 is a flowchart showing an operation example of a business processing support system according to an exemplary embodiment of the present invention.

### DETAILED DESCRIPTION OF THE INVENTION

Hereinafter, an exemplary embodiment of the present invention will be described in detail with reference to the drawings.

### [Outline of Present Exemplary Embodiment]

The present exemplary embodiment provides an information processing apparatus that acquires specific document data and outputs, in a case where the specific document data includes a text code string, the text code string included in the specific document data as input data for processing executed by outputting a text code string obtained by text recognition of document data in a predetermined format, in the predetermined format.

Further, in a case where the specific document data further includes text coordinates, the information processing apparatus may further output the text coordinates included in the specific document data as input data for processing executed by outputting a text code string and text coordinates obtained by text recognition of document data in a predetermined format, in the predetermined format.

As described above, the information processing apparatus may output the text code string included in the specific document data in the predetermined format, or may output the text code and text coordinates included in the specific document data in the predetermined format, but the latter will be described below as an example.

Further, the processing executed by outputting the text code string obtained by text recognition of the document data in the predetermined format may be any processing, but business processing performed by a business processing system will be described as an example. Then, the information processing apparatus will be described as a business processing support system that supports the business processing.

Further, the information processing apparatus determines whether or not specific document data includes a text code string. In that case, the specific document data may consist of a plurality of pages, and the information processing apparatus may determine whether or not the specific document data includes a text code string for each page.

In the present exemplary embodiment, processing may be performed on the entire electronic document, but in the following, a case where processing is performed for each page as described above will be described as an example.

Furthermore, in a case where specific document data includes a text code string and image data, the information processing apparatus may output a combined text code string obtained by combining the text code string included in the specific document data and a text code string obtained by text recognition of image data in a predetermined format.

In the present exemplary embodiment, the information processing apparatus does not have to perform such an operation, but in the following, a case where such an operation is also performed will be described as an example.

### [Overall Configuration of Computer System]

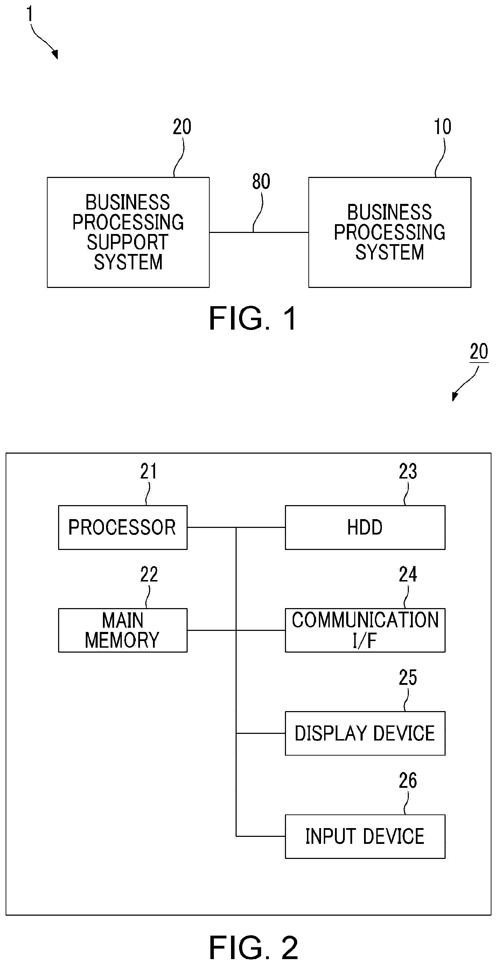

Fig. 1 is a diagram showing an overall configuration example of a computer system 1 to which the present exemplary embodiment is applied. As shown in the drawing, the computer system 1 is configured by connecting a business processing system 10 and a business processing support system 20 via a communication line 80.

The business processing system 10 is a system that performs some business processing on input data. The business processing system 10 may include, for example, a workflow system that performs approval processing and the like for input data according to a workflow, and an accounting system that performs accounting processing on data after the approval processing or the like is performed on the input data.

The business processing support system 20 is a system that supports business processing by the business processing system 10, by acquiring text string information from an input electronic document and inputting the input data obtained from the text string information into the business processing system. Here, the text string information is information related to a text string, and is information including a text code and text coordinates for each text included in the text string.

The communication line 80 is a line used for information communication between the business processing system 10 and the business processing support system 20. As the communication line 80, for example, a local area network (LAN) or the Internet may be used.

### [Hardware Configuration of Business Processing Support System]

Fig. 2 is a diagram showing a hardware configuration example of the business processing support system 20 according to the present exemplary embodiment. The business processing support system 20 may consist of a single apparatus or a plurality of apparatuses, but in the drawing, a case where the business processing support system 20 consists of a single apparatus is taken as an example. As shown in the drawing, the business processing support system 20 includes a processor 21, a main memory 22, and a hard disk drive (HDD) 23. Here, the processor 21 executes various software such as an operating system (OS) and an application, and realizes each function described later. Further, the main memory 22 is a storage area for storing various software and data used for executing the software, and the HDD 23 is a storage area for storing input data for various software and output data from various software. Furthermore, the business processing support system 20 includes a communication I/F (hereinafter, referred to as "I/F") 24 for communicating with an outside, a display device 25 such as a display, and an input device 26 such as a keyboard and a mouse.

### [First Specific Example of Present Exemplary Embodiment]

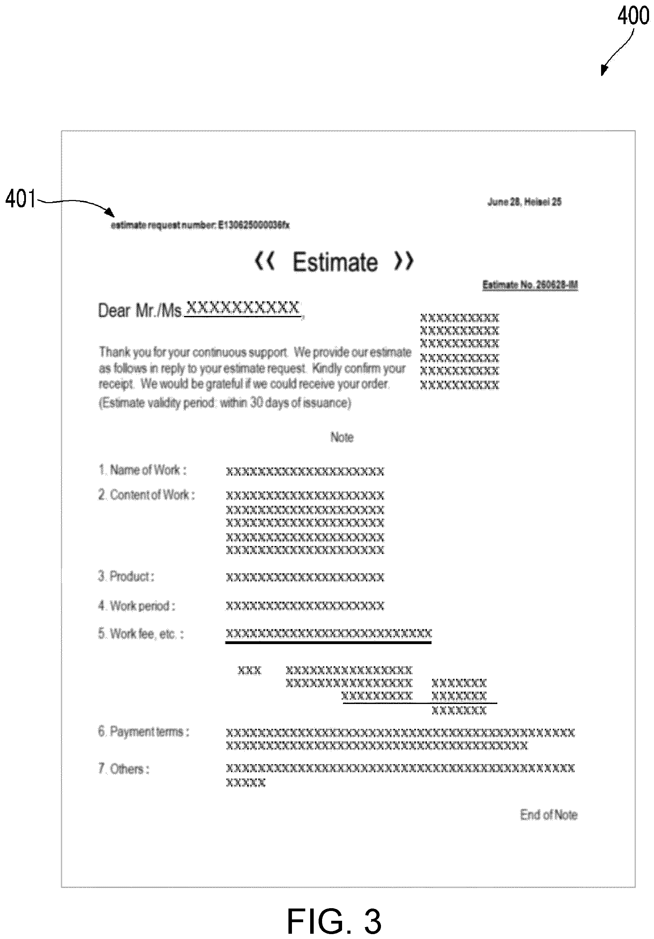

Fig. 3 is a diagram showing a page 400, which is an example of a page that does not include text string information. The page 400 is, for example, a scanned PDF obtained by scanning a printed document with a scanner and converting the scanned PDF into a PDF file. That is, the page 400 includes text strings such as a text string 401, but does not include text string information consisting of the text codes and text coordinates of the texts in these text strings. Therefore, the business processing support system 20 may not directly extract and output the text string information from the page 400. Therefore, the business processing support system 20 performs text recognition on the page 400 and outputs the text recognition result as the text string information.

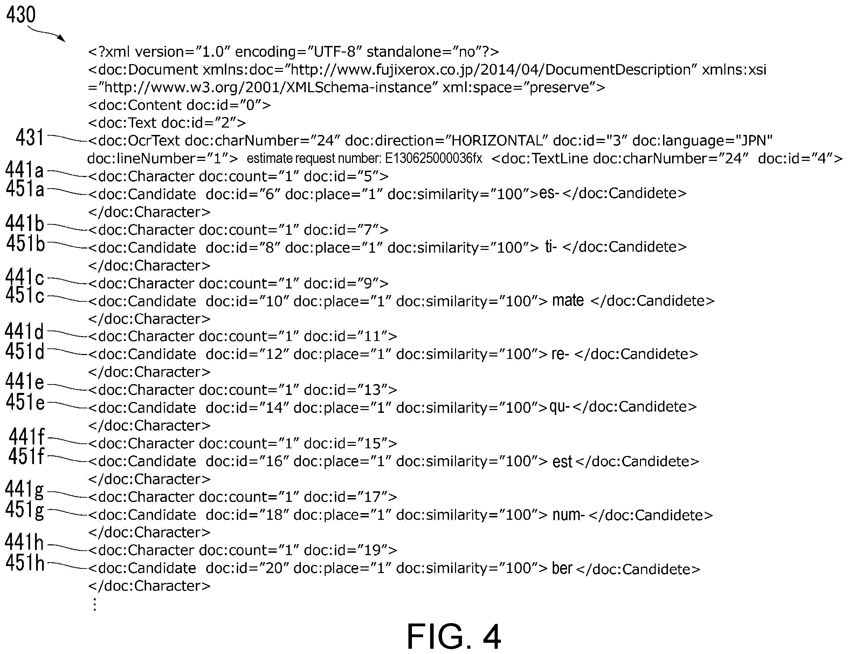

Fig. 4 is a diagram showing a file 430 which is an example of a file of the text recognition result. The file 430 is an extensible markup language (XML) file. Then, the file 430 is assumed to include a description 431 corresponding to the text string 401, text position descriptions 441a to 441h of the texts included in the text string 401, and text descriptions 451a to 451h in the text string 401. Note that the text descriptions 451a to 451h are actually descriptions of the text codes, but for convenience, the description of the text is shown. Further, the text string 401 is "estimate request number: E130625000036fx", but due to the space limitation, only the text position descriptions 441a to 441h and the text descriptions 451a to 451h corresponding to "estimate request number" in the text string 401 are shown. Since the page 400 does not include the text string information, in the file 430, the text position descriptions 441a to 441h and the text descriptions 451a to 451h are generated based on the text recognition result. Here, the file 430 is an XML file, but the present exemplary embodiment is not limited to the XML file, and files in other formats may be used.

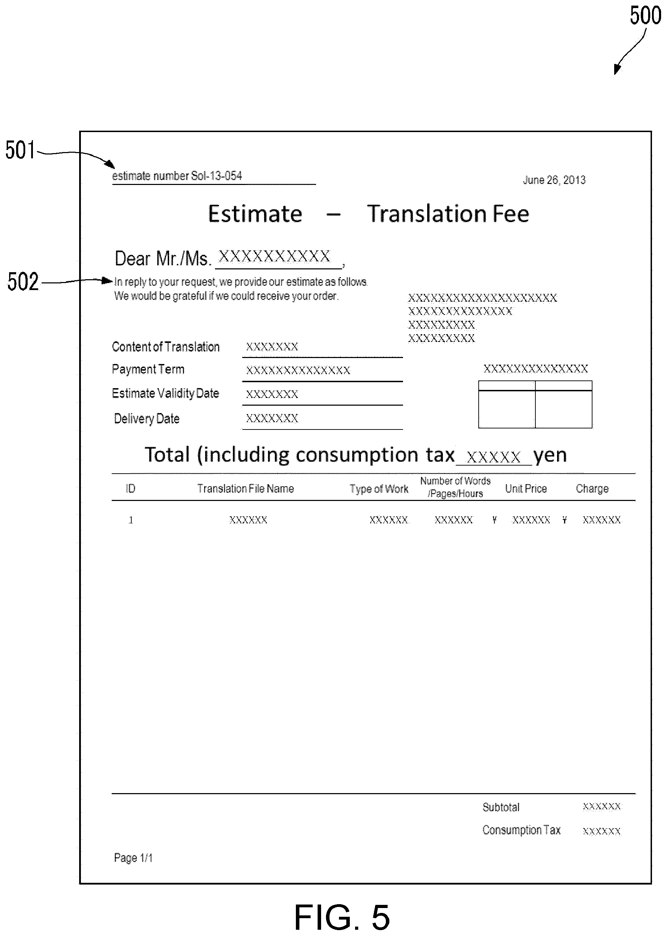

Fig. 5 is a diagram showing a page 500, which is an example of a page that includes text string information. The page 500 is, for example, a born digital PDF in which a document created by document creation software is converted by software into a PDF file. That is, the page 500 includes text strings such as text strings 501 and 502, and also includes text string information consisting of text codes and text coordinates of the texts in these text strings. Therefore, the business processing support system 20 may directly extract and output the text string information from the page 500.

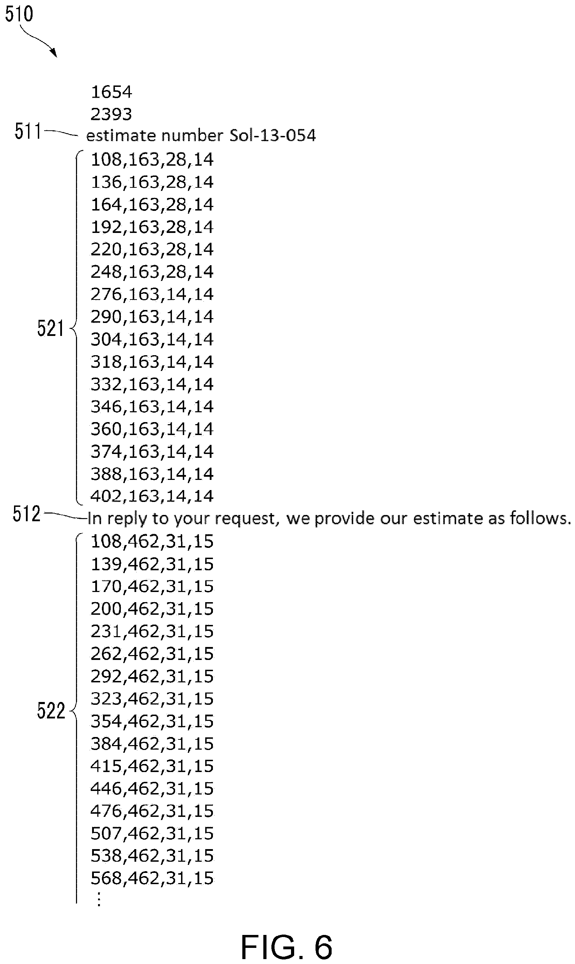

Fig. 6 is a diagram showing text string information 510 which is an example of text string information extracted directly from the page 500. The text string information 510 includes an element 511 indicating the text string 501 and elements 521 indicating the text coordinates of the texts included in the text string 501. Further, the text string information 510 includes an element 512 indicating the text string 502 and elements 522 indicating the text coordinates of the texts included in the text string 502. Note that the elements 511 and 512 indicating the text strings 501 and 502 are actually text code strings, but for convenience, the text strings are shown. Further, the elements 522 show only a part of the text coordinates due to the space limitation.

Therefore, the business processing support system 20 converts the text string information directly output from the page 500 into a format in a case of outputting the text recognition result shown in Fig. 4.

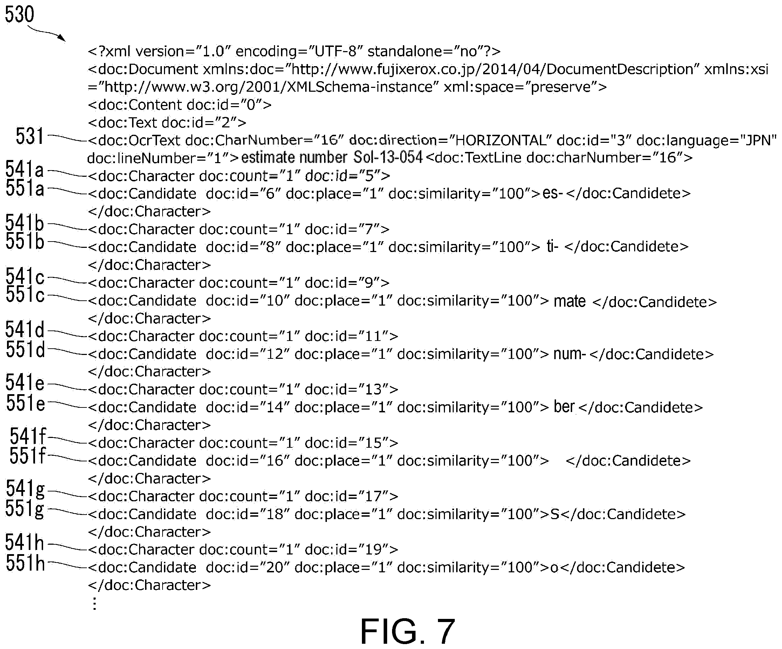

Fig. 7 is a diagram showing a file 530 which is an example of a file obtained by the format conversion as described above. Since the file 530 has the same format as that in Fig. 4, it is regarded as an XML file. Then, the file 530 includes a description 531 corresponding to the text string 501, text position descriptions 541a to 541h of the texts included in the text string 501, and text descriptions 551a to 551h in the text string 501. Note that the text descriptions 551a to 551h are actually descriptions of the text codes, but for convenience, the description of the text is shown. Further, the text string 501 is "estimate number Sol-13-054", but due to the space limitation, only the text position descriptions 541a to 541h and the text descriptions 551a to 551h corresponding to "estimate number So" in the text string 501 are shown. In the file 530, the text position descriptions 541a to 541h and the text descriptions 551a to 551h are generated based on the text string information 510. Although the file 530 is assumed to be an XML file here, the file is not necessarily limited to the XML file, and a file in another format may be used as long as the file has the same format as that in Fig. 4.

### [Second Specific Example of Present Exemplary Embodiment]

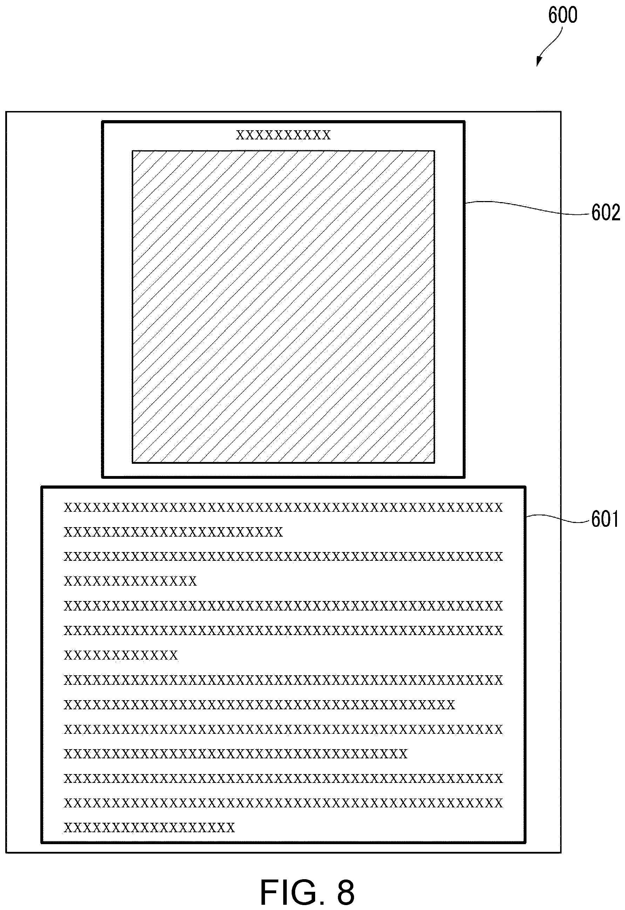

Fig. 8 is a diagram showing a page 600, which is an example of a page that includes text string information and an image. The page 600 is, for example, a born digital PDF in which a web page is converted by software into a PDF file. However, in the page 600, the text string information may be directly extracted from an area 601 but an area 602 is an image and the text string information may not be directly extracted from the area 602. Therefore, the business processing support system 20 first directly extracts the text string information from the area 601 and uses the text string information as first output information. Further, in a case where a ratio of the area 602 to the page 600 is equal to or more than a threshold, the business processing support system 20 specifies the coordinates of the area 602 and converts the entire page 600 into an image . Here, any ratio may be adopted as the threshold, but in the following, the threshold will be described as 1/N of the page. Then, the business processing support system 20 performs text recognition on the area 602 of which coordinates are specified above, extracts text string information, and uses the text string information as second output information. After that, the business processing support system 20 merges the first output information and the second output information to obtain a final result.

### [Functional Configuration of Business Processing Support System]

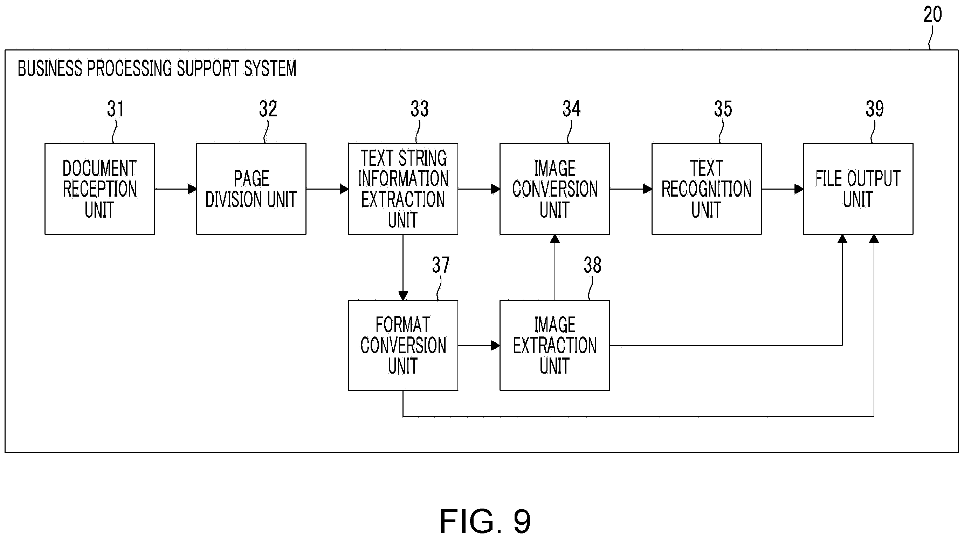

Fig. 9 is a block diagram showing a functional configuration example of the business processing support system 20 according to the present exemplary embodiment. As shown in the drawing, the business processing support system 20 includes a document reception unit 31, a page division unit 32, a text string information extraction unit 33, an image conversion unit 34, a text recognition unit 35, a format conversion unit 37, an image extraction unit 38, and a file output unit 39.

The document reception unit 31 receives an input electronic document. At that time, the document reception unit 31 inspects that the input electronic document is in a processable format. Here, PDF and the like are exemplified as the format of the electronic document. In the present exemplary embodiment, the processing of the document reception unit 31 is performed as an example of acquiring specific document data.

The page division unit 32 divides the electronic document received by the document reception unit 31 into a plurality of pages. Then, the page division unit 32 delivers the plurality of pages obtained by dividing the electronic document to the text string information extraction unit 33 in order from a first page to a last page.

The text string information extraction unit 33 attempts to extract the text string information from the page delivered from the page division unit 32, and determines whether or not the extraction of the text string information is successful. In a case where it is not determined that the extraction of the text string information from the page delivered from the page division unit 32 is successful, the text string information extraction unit 33 delivers the page to the image conversion unit 34. Further, in a case where it is determined that the extraction of the text string information from the page delivered from the page division unit 32 is successful, the text string information extraction unit 33 delivers the extracted text string information and the page to the format conversion unit 37. Here, the successful extraction of the text string information from the page means that the page includes the text string information. In the present exemplary embodiment, the processing of the text string information extraction unit 33 is performed as an example of determining whether or not the specific document data includes the text code string.

The image conversion unit 34 performs image conversion on the page delivered from the text string information extraction unit 33 or the page delivered from the image extraction unit 38 as described later. For example, the image conversion unit 34 may perform image conversion by printing a page delivered from the text string information extraction unit 33 or the image extraction unit 38 with a printing apparatus and reading the page with an image reading apparatus. Alternatively, the image conversion unit 34 may perform image conversion on the page delivered from the text string information extraction unit 33 or the image extraction unit 38, for example, by software. Then, the image conversion unit 34 delivers the image data generated by the image conversion to the text recognition unit 35. Here, as a format of the image data, JPG, TIFF, and the like are exemplified.

The text recognition unit 35 performs text recognition on the image data delivered from the image conversion unit 34, and delivers a file of the text recognition result in a predetermined format to the file output unit 39. At that time, in a case where the image conversion unit 34 receives information on the position of the image in the page from the image extraction unit 38 as described later, the text recognition unit 35 performs text recognition with respect to the image in the page specified by the position information. Then, in a case where the text recognition of the image is successful, the text recognition unit 35 delivers the file of the text recognition result in the predetermined format to the file output unit 39. Further, in a case where the text recognition of the image is not successful, the text recognition unit 35 notifies the file output unit 39 to that effect.

The format conversion unit 37 converts the text string information delivered from the text string information extraction unit 33 into a file in the same predetermined format as the format in a case where the text recognition unit 35 outputs the text recognition result. Here, for example, the format conversion unit 37 may hold in advance the format in a case where the text recognition unit 35 outputs the text recognition result. Then, the format conversion unit 37 delivers the file in the predetermined format generated by the format conversion to the file output unit 39. Further, the format conversion unit 37 delivers the page delivered from the text string information extraction unit 33 to the image extraction unit 38.

The image extraction unit 38 attempts to extract an image from the page delivered from the format conversion unit 37, and determines whether or not the extraction of an image of 1/N or more of the page is successful. In a case where the image extraction unit 38 determines that the extraction of the image of 1/N or more of the page is successful, the image extraction unit 38 delivers the page to the image conversion unit 34 together with the information on the position of the image. Further, in a case where it is not determined that the extraction of the image of 1/N or more of the page is successful, the image extraction unit 38 notifies the file output unit 39 to that effect.

The file output unit 39 receives and holds the file from the text recognition unit 35 or the format conversion unit 37 for each page from the first page to the last page. At that time, in a case where the file output unit 39 receives files from both the text recognition unit 35 and the format conversion unit 37 because the page includes the text string information and the image of 1/N or more of the page, the file output unit 39 merges and holds the files. Further, in a case where the text recognition unit 35 notifies that the text recognition of the image in the page is not successful, or in a case where the image extraction unit 38 notifies that the extraction of the image of 1/N or more of the page is not successful, the file output unit 39 receives and holds a file only from the format conversion unit 37. Then, in a case where the file output unit 39 receives the file for the last page, the file output unit 39 collectively outputs the received files for the last page from the first page to the business processing system 10 (refer to Fig. 1).

That is, for a page that does not include text string information, a file in a predetermined format obtained by text recognition of the page is delivered from the text recognition unit 35, so that the file output unit 39 outputs the file in the predetermined format. Further, for a page that includes text string information, the text string information is converted into a file in a predetermined format and delivered from the format conversion unit 37, so that the file output unit 39 outputs a file in the predetermined format. In the present exemplary embodiment, in a case where the specific document data includes a text code string, the processing of the file output unit 39 is performed as an example of outputting the text code string included in the specific document data as input data for processing executed by outputting the text code string obtained by text recognition of the document data in a predetermined format, in the predetermined format. That is, in the present exemplary embodiment, a page that includes the text string information is used as an example of the first page that includes the text code string, and a page that does not include the text string information is used as an example of the second page that does not include the text code string. Then, the processing of the file output unit 39 is performed as an example of outputting the text code string included in the first page in a format in which a text code string obtained by text recognition of the second page is output, as the predetermined format.

Further, for the page that includes the text string information and the image, the file output unit 39 merges and outputs the file in the predetermined format delivered from the text recognition unit 35 and the file in the predetermined format delivered from the format conversion unit 37. In the present exemplary embodiment, in a case where the specific document data includes the text code string and the image data, the processing of the file output unit 39 is performed as an example of outputting a combined text code string obtained by combining the text code string included in the specific document data and the text code string obtained by text recognition of image data, in the predetermined format. At that time, the file output unit 39 may be subject to the condition that 1/N or more of the image of the page is extracted from the page that includes the text string information and the image. In that case, the processing performed by the file output unit 39 is an example of outputting the combined text code string in the predetermined format in a case where the ratio of the area of the image data to the area of the specific document data is equal to or more than the threshold.

### [Operation of Business Processing Support System]

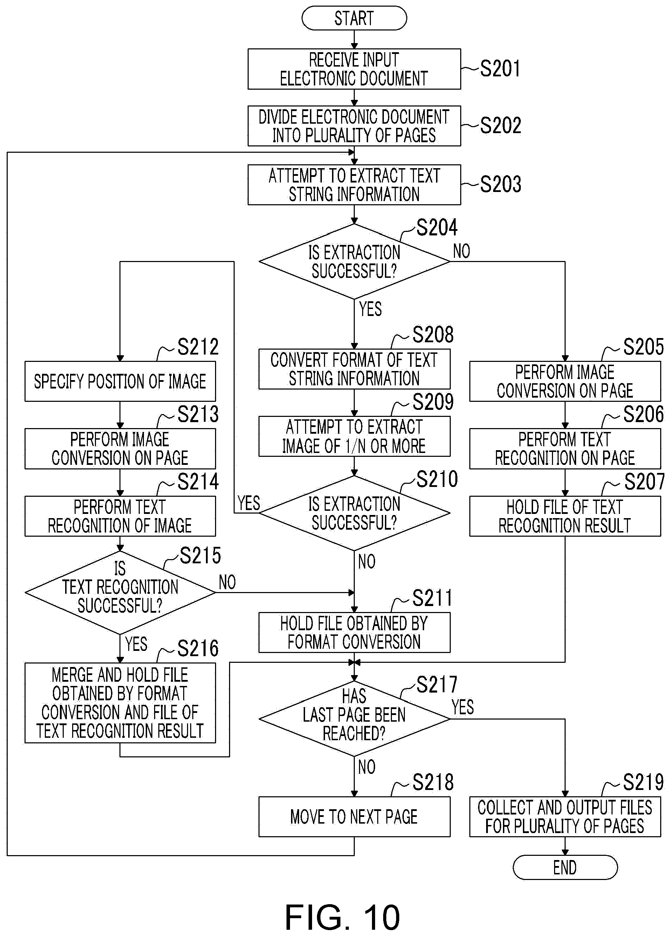

Fig. 10 is a flowchart showing an operation example of the business processing support system 20 according to the present exemplary embodiment.

In the business processing support system 20, first, the document reception unit 31 receives the input electronic document (step S201).

Next, the page division unit 32 divides the electronic document received in step S201 into a plurality of pages (step S202) . Then, the page division unit 32 repeats the processing from step S203 to step S218 by delivering the plurality of pages obtained in step S202 to the text string information extraction unit 33 in order from the first page to the last page.

That is, first, the text string information extraction unit 33 attempts to extract text string information from one of the plurality of pages obtained in step S202 (step S203) . Then, the text string information extraction unit 33 determines whether or not the extraction of the text string information is successful (step S204).

First, a case where it is not determined that the extraction of the text string information is successful in step S204 will be described.

In this case, the image conversion unit 34 performs image conversion on the page (step S205) . Then, the text recognition unit 35 performs text recognition on the page for which the image conversion has been performed in step S205 (step S206) . As a result, the file output unit 39 holds the file of the text recognition result (step S207).

Next, a case where it is determined in step S204 that the extraction of the text string information has been successfully performed will be described.

In this case, the format conversion unit 37 converts the text string information extracted in step S203 into the same format as the file held in step S207 (step S208). Here, for example, the format conversion unit 37 may hold the format in advance.

Next, the image extraction unit 38 attempts to extract an image of 1/N or more of the page (step S209). Then, the image extraction unit 38 determines whether or not the extraction of the image of 1/N or more of the page is successful (step S210).

In a case where it is not determined in step S210 that the extraction of the image of 1/N or more of the page is successful, the file output unit 39 holds the file obtained by the format conversion in step S208 (step S211).

In a case where it is determined in step S210 that the extraction of the image of 1/N or more of the page is successful, the image extraction unit 38 specifies the position of the image (step S212).

Next, the image conversion unit 34 performs image conversion on the page (step S213) . Then, the text recognition unit 35 performs text recognition with respect to the image of which position is specified in step S212 in the page for which image conversion has been performed in step S213 (step S214). As a result, the text recognition unit 35 determines whether or not the text recognition is successful (step S215) .

In a case where it is not determined in step S215 that the text recognition is successful, the file output unit 39 holds the file obtained by the format conversion in step S208 (step S211).

In a case where it is determined in step S215 that the text recognition is successful, the file output unit 39 merges and holds the file obtained by the format conversion in step S208 and the file of the text recognition result in step S214 (step S216).

After that, the page division unit 32 determines whether or not the last page among the plurality of pages obtained in step S202 has been reached (step S217).

In a case where it is not determined that the last page has been reached in step S217, the page division unit 32 moves to the next page among the plurality of pages obtained in step S202 (step S218). That is, the page division unit 32 delivers the next page to the text string information extraction unit 33, and performs the processing after step S203.

In a case where it is determined that the last page has been reached in step S217, the file output unit 39 collects the files for each page held in step S207, step S211, or step S216 for the plurality of pages obtained in step S202 to output to the business processing system 10 (step S219).

### [Processor]

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

### [Program]

The processing performed by the business processing support system 20 in the present exemplary embodiment is prepared as, for example, a program such as application software.

That is, the program that realizes the present exemplary embodiment may be regarded as a program for causing a computer to realize a function of acquiring specific document data in the computer, and a function of outputting, in a case where the specific document data includes a text code string, the text code string included in the specific document data as input data for processing executed by outputting a text code string obtained by text recognition of document data in a predetermined format, in the predetermined format.

Note that the program that realizes the present exemplary embodiment may be provided not only by communication means but also by storing the program in a recording medium such as a CD-ROM.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

- 10:: business processing system
- 20:: business processing support system
- 31:: document reception unit
- 32:: page division unit
- 33:: text string information extraction unit
- 34:: image conversion unit
- 35:: text recognition unit
- 37:: format conversion unit
- 38:: image extraction unit
- 39:: file output unit

## Claims

1. An information processing apparatus comprising:
a processor configured to:
acquire specific document data; and
in a case where the specific document data includes a text code string, output the text code string included in the specific document data as input data for processing executed by outputting a text code string obtained by text recognition of document data in a predetermined format, in the predetermined format.

2. The information processing apparatus according to claim 1, wherein the processor is configured to:
in a case where the specific document data further includes text coordinates, further output the text coordinates included in the specific document data as input data for processing executed by outputting a text code string and text coordinates obtained by text recognition of the document data in the predetermined format, in the predetermined format.

3. The information processing apparatus according to claim 1, wherein the processor is configured to:
determine whether or not the specific document data includes a text code string.

4. The information processing apparatus according to claim 3,
wherein the specific document data consists of a plurality of pages, and
determination as to whether the specific document data includes a text code string is made for each page.

5. The information processing apparatus according to claim 4,
wherein the plurality of pages include a first page that includes a text code string and a second page that does not include a text code string, and
the processor is configured to:
output the text code string included in the first page in a format in which a text code string obtained by text recognition of the second page is output, as the predetermined format.

6. The information processing apparatus according to claim 1, wherein the processor is configured to:
in a case where the specific document data includes a text code string and image data, output a combined text code string obtained by combining the text code string included in the specific document data and a text code string obtained by text recognition of the image data, in the predetermined format.

7. The information processing apparatus according to claim 6, wherein the processor is configured to:
output the combined text code string in the predetermined format in a case where a ratio of an area of the image data to an area of the specific document data is equal to or more than a threshold.

8. A program for causing a computer to realize:
a function of acquiring specific document data; and
a function of outputting, in a case where the specific document data includes a text code string, the text code string included in the specific document data as input data for processing executed by outputting a text code string obtained by text recognition of document data in a predetermined format, in the predetermined format.

9. An information processing method comprising:
acquiring specific document data; and
outputting, in a case where the specific document data includes a text code string, the text code string included in the specific document data as input data for processing executed by outputting a text code string obtained by text recognition of document data in a predetermined format, in the predetermined format.
